# EUROPÄISCHE PATENTSCHRIFT

(11) **EP 0 943 542 B1**
(45) Veröffentlichungstag und Bekanntmachung des Hinweises auf die Patenterteilung: **06.08.2003**
(21) Anmeldenummer: 99101991.0
(22) Anmeldetag: 01.02.1999
(51) Int. Cl.: B64D 9/00, B60P 1/64, B64C 1/20

(54) **Riegelelement zum Arretieren von Frachtgütern innerhalb eines Frachtladesystems, insbesondere in einem Flugzeug**
Clamping element for restraining freight within a cargo loading system, in particular in aircraft
Elément de verrouillage pour un système de blocage des colis dans une soute à fret, notament pour avion

(30) Priorität: 19.03.1998 DE 19812014
(43) Veröffentlichungstag der Anmeldung: 22.09.1999
(73) Patentinhaber: Airbus Deutschland GmbH, 21129 Hamburg (DE)
(72) Erfinder: Niklas, Veronika, 20257 Hamburg (DE); Völker, Claus, 28816 Stuhr (DE); Sempert, Hartmut, 27798 Hude (DE); Eckert, Volker, 26135 Oldenburg (DE); Eilts, Torsten, 31330 Merville (FR); Czisz, Bernhard, 27211 Bassum (DE); Schernikau, Bernd, 22145 Hamburg (DE); Mix, Hans-Günther, 27777 Ganderkese (DE)
(74) Vertreter: Hansmann, Dierk, Dipl.-Ing.

(56) Entgegenhaltungen:
- EP-A- 0 106 591
- DE-A- 3 107 745
- DE-A- 19 525 392
- US-A- 5 618 139

## Beschreibung

Die Erfindung betrifft ein Riegelelement zum Arretieren von Frachtgütern innerhalb eines Frachtladesystems, insbesondere in einem Flugzeug, wobei das Riegelement über entsprechende Vorsprünge des Frachtgutes, wie Paletten oder Frachtcontainer, am Frachtgut greift und in vertikaler und lateraler Richtung das Frachtgut fixiert.

Derartige Riegelelemente sind aus DE-PS 31 07 745 oder auch DE-PS 42 10 703 bekannt. Die bekannten Riegelelemente, die im allgemeinen als YZ-Riegel (überrollbar oder fest) bezeichnet werden, dienen dazu, die an ihre jeweilige Stauposition im Frachtraum verfahrenen Frachtstücke, wie Paletten oder Container, in vertikaler und lateraler Richtung in dieser Position zu fixieren. Dies geschieht über mindestens einen Riegelhaken, der über entsprechende Vorsprünge des Frachtstückes greift. Bei entsprechender Anordnung der Riegelelemente im Frachtladesystem ist somit das Frachtgut nur noch in einer Förderrichtung (X-Richtung) bewegbar. Dabei ist an den bisherigen Riegelhaken im Bereich der Anschlagfläche des Frachtgutes, d.h. an der Kontaktfläche zwischen den Vorsprüngen des Frachtgutes und dem Riegelhaken am Riegelhaken eine Bronze-Schicht vorgesehen. Diese kostenintensive Beschichtung ist notwendig, da aufgrund der Bewegung des Frachtgutes in Förderrichtung eine Gleitreibung an dieser Stelle auftritt und diese vorhandene Gleitreibung so gering wie möglich zu halten ist, um die notwendige Förderkraft zu minimieren. Zusätzlich zum Riegelhaken, der eine Fixierung in Z-Richtung erlaubt - die sogenannte Z-Nase-, ist senkrecht am Riegelhaken eine Kontaktrolle als Anschlag des Frachtgutes in Y-Richtung angeordnet, bei der eine Rollreibung auftritt, wenn in Förderrichtung das Frachtgut bewegt wird. Damit ist eine recht aufwendige Konstruktion am Riegelelement notwendig, die in Y- und Z-Richtung eine Fixierung des Frachtgutes erlaubt, aber in X-Richtung Verfahren des Frachtgutes ermöglicht. Auch das Aufbringen der Kontaktschicht am Riegelhaken erfordert fertigungstechnischen Aufwand, wobei die zu verwendenden Materialien dieser Schicht kostenintensiv sind und trotzdem infolge der auftretenden Gleitreibung nicht immer ein leichtgängiges Verschieben der Frachtcontainer möglich ist.

Der Erfindung liegt daher die Aufgabe zugrunde, ein Riegelelement der eingangs genannten Art zu schaffen, der mit einfachen und kostengünstigen Mitteln in Y-und Z-Richtung eine Fixierung des Frachtgutes erlaubt, aber in X-Richtung ein leichtgängiges Verfahren des Frachtgutes ermöglicht.

Diese Aufgabe wird bei einem gattungsgemäßen Riegelelement mit den im Patentanspruch 1 genannten Maßnahmen gelöst.

Dabei ist insbesondere von Vorteil, daß die bisher auftretende Gleitreibung nicht mehr vorhanden ist und nunmehr aufgrund der Rollreibung ein leichtgängiges Verfahren in X-Richtung ermöglicht ist.

Weiterbildungen und vorteilhafte Ausgestaltungen sind in den Unteransprüchen 2 bis 7 angegeben.

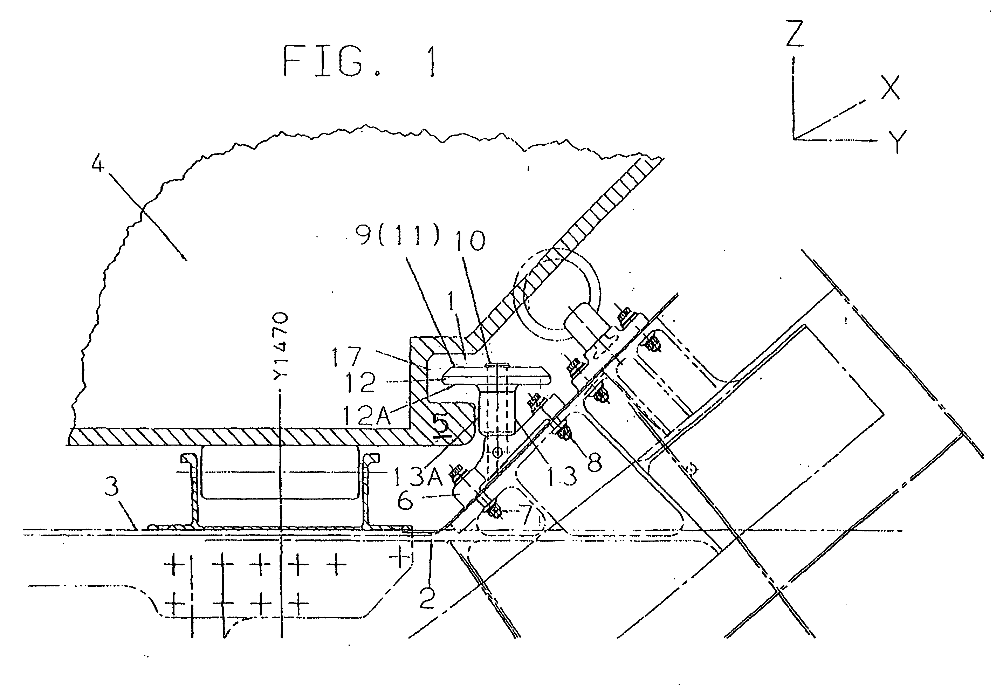

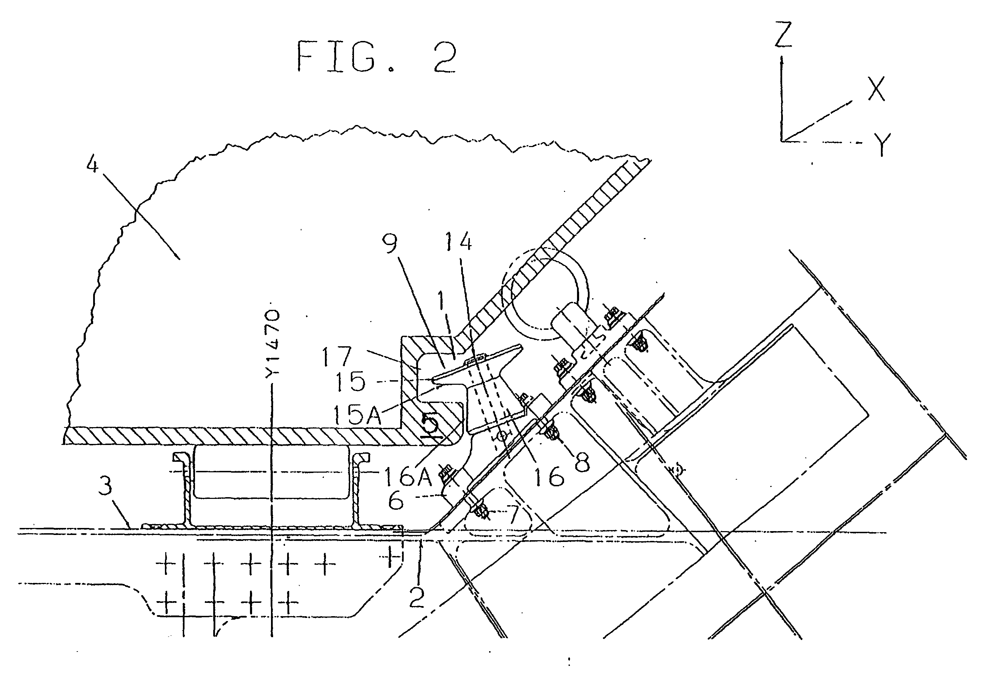

In der Zeichnung ist ein Ausführungsbeispiel der Erfindung dargestellt. Es wird nachstehend anhand der Figuren 1 und 2 näher beschrieben. In den Figuren sind gleiche Bauteile mit gleichen Bezugszeichen versehen.

Es zeigt
- Fig. 1: ein Riegelelement in einer ersten Ausführungsform und
- Fig. 2: ein Riegelelement in einer zweiten Ausführungsform.

Die Fig. 1 zeigt ein Riegelelement 1, welches fest an der Flugzeugstruktur 2 im Bereich des Frachtraumbodens 3 angeordnet ist. Das Riegelelement 1 - ein sogenannter fester YZ-Riegel - ist innerhalb eines Frachtladesystems im Frachtraum eines Flugzeuges vorgesehen. Es dient dem Zweck, die an ihre jeweilige Stauposition im Frachtraum verfahrenen Frachtstücke, wie Paletten oder Container, in vertikaler und lateraler Richtung in dieser Position zu fixieren. Ersichtlich in der Fig. 1 ist ein Frachtcontainer 4, der am Riegelelement 1 in vertikaler (Z-Koordinate) und lateraler (Y-Koordinate) Richtung fixiert ist. Der Frachtcontainer 4 weist dazu seitlich Vorsprünge 5 auf, über die das Riegelelement 1 greifen kann. Das Riegelelement 1 besteht im wesentlichen aus einem Befestigungsteil 6 und einem Anschlagteil 9. Das Befestigungsteil 6 kann mit Befestigungsmitteln, wie beispielsweise Schraubverbindungen 7 und 8, an der Flugzeugstruktur 2 befestigt werden. Es weist weiterhin einen in Z-Achse gerichteten Bolzen 10 auf, der mit dem Anschlagteil 9 in Wirkverbindung steht. Das Anschlagteil 9 ist dafür in der gezeigten Ausführungsform als pilzförmige Rolle 11 ausgebildet. Die Rolle 11 ist auf den Bolzen 10 aufgesteckt und befestigt. Um die Längsachse des Bolzens 10 ist die Rolle 11 drehbar. Damit kann in Y-und Z-Richtung der Frachtcontainer 4 gehalten werden und nur in X-Richtung ist eine Bewegung möglich. Die Rolle 11 ist in der gezeigten Ausführungsform T-förmig (oder pilzförmig) ausgebildet und weist ein Rollelement 12 mit Anschlagfläche 12A für den Vorsprung 5 in Z-Richtung und ein Rollelement 13 mit Anschlagfläche 13A für den Vorsprung 5 in Y-Richtung auf. Die Rollelemente 12 und 13 sind vorzugsweise zylinderförmig, wobei die Mantelfläche (bei Rollelement 13) bzw. die Stirnfläche (bei Rollelement 12) die Anschlagflächen 12A und 13A zum Vorsprung 5 bilden. Das Rollelement 12, dessen Stirnfläche die Anschlagfläche 12A bildet, ist im wesentlichen flach mit nur einer geringen Z-Ausdehnung ausgebildet. Damit ist ein Eingriff in die am Frachtcontainer 4 vorgesehene Aussparung 17 möglich. Wenn der Frachtcontainer 4 in Förderrichtung bewegt wird, kann an den Anschlagstellen 12A und 13A der Rollelemente 12 bzw. 13 Rollreibung auftreten, die geringer ist als die an den bisher bekannten Riegelelementen auftretende Gleitreibung.
Die Rolle 11 kann einteilig mit den Rollelementen 12 und 13 ausgebildet sein. In diesem Fall stimmen die Abrollgeschwindigkeiten an der Anschlagfläche 12A des Rollelements 12 und an der Anschlagfläche 13A des Rollelements 13 nicht überein und es kann trotz der Rollreibung noch zu gewissen Gleitbewegungen zwischen den Kontaktstellen von Vorsprung 5 und Rollelement 12 kommen. Um diese Gleitbewegung und die damit entstehende Gleitreibung zu minimieren, ist die Anschlagfläche 12A des Rollelements 12 vorzugsweise leicht ballig geformt. Damit ist eine punktförmige Anschlagfläche erreicht, was die Reibung minimiert. Zur Verminderung einer Gleitreibung kann die Rolle 11 auch zweiteilig ausgebildet sein, wie in Fig. 1 gezeigt. Das heißt die Rollelemente 12 und 13 sind separate Bauteile, die T-förmig angeordnet sind, sich aber unabhängig voneinander drehen können. In diesem Fall, insbesondere bei einer leicht balligen, eine punktförmige Kontaktfläche erzeugende Ausführung der Anschlagfläche 12A vom Rollelement 12, tritt nur noch Rollreibung an den Kontaktstellen zwischen Vorsprung 5 des Frachtcontainers 4 und Rollelementen 12 bzw. 13 auf. Damit ist in Förderrichtung (X-Richtung) eine leichtgängige Bewegung des Frachtcontainers ermöglicht und die notwendige Förderkraft ist minimal.

In Fig. 2 ist das Riegelelement 1 in einer zweiten Ausführungsform ersichtlich. Dieses Riegelelement 1 ist - wie schon in der Figurenbeschreibung zur Fig. 1 ausgeführt - im Frachtraum eines Flugzeuges im Bereich des Frachtraumbodens 3 an der Flugzeugstruktur 2 befestigt. Es entspricht auch in wesentlichen Teilen dem in der Fig. 1 beschriebenen Riegelelement 1. So besteht es ebenfalls aus Befestigungsteil 6 und Anschlagteil 9. Das Befestigungsteil 6 ist mittels Schraubverbindungen 7 und 8 an der Flugzeugstruktur 2 befestigt. Ein Bolzen 14 ist am Befestigungsteil 6 angeordnet und ragt in Richtung Frachtraum, so daß er das Anschlagteil 9 in entsprechender Position zum Vorsprung 5 des Frachtcontainers 4 hält. Das Anschlagteil 9 ist vorzugsweise zweiteilig ausgebildet und weist Rollelemente 15 und 16 auf. Die Rollelemente 15 und 16 sind als Kegelstümpfe ausgebildet, wobei die Mantelfläche vom Rollelement 15 die Anschlagfläche 15A für den Vorsprung 5 in Z-Richtung und die Mantelfläche vom Rollelememt 16 die Anschlagfläche 16A für den Vorsprung 5 in Y-Richtung bildet. Die Rollelemente 15 und 16 sind so positioniert, daß jeweils eine Anschlagfläche 15A bzw. 16A für die Fixierung des Vorsprunges 5 in Z- bzw. Y-Richtung vorgesehen ist. Aufgrund der Kegelstumpfform der Rollelemente 15 und 16 entsteht auch gleichzeitig eine Anschrägung zum leichteren Einfädeln der Frachtcontainer 4. Insbesondere das kegelstumpfförmige Rollelement 15 muß so ausgebildet sein, daß ein Eingreifen in die Aussparung 17 am Frachtcontainer 4 ermöglicht wird. Wie schon am Rollelement 12 in der ersten Ausführungsform des Riegels 1 kann auch am Rollelement 15 die Anschlagfläche 15A leicht ballig geformt sein, um einen punktförmigen Kontakt zwischen Anschlagfläche 15A und Vorsprung 5 zu erreichen. Damit tritt im wesentlichen nur noch Rollreibung zwischen Riegel 1 und dem Vorsprung 5 des Frachtcontainers 4 auf.

## Patentansprüche

1. Riegelelement zum Arretieren von Frachtgütern innerhalb eines Frachtladesystems, insbesondere in einem Flugzeug, wobei das Riegelement über entsprechende Vorsprünge des Frachtgutes, wie Paletten oder Frachtcontainer, am Frachtgut greift und in vertikaler und lateraler Richtung das Frachtgut fixiert,
**dadurch gekennzeichnet, daß** das Riegelelement (1) ein Befestigungsteil (6) und ein Anschlagteil (9) aufweist, das Anschlagteil (9) auf einem Bolzen (10;14) drehbar angeordnet und aus mindestens zwei Rollelementen (12, 13; 15, 16) gebildet ist, wobei die Anschlagfläche (12A; 15A) eines Rollelements (12; 15) das Frachtgut (4) in vertikaler Richtung und die Anschlagfläche (13A; 16A) des weiteren Rollelements (13; 16) das Frachtgut (4) in lateraler Richtung fixiert.

2. Riegelelement nach Anspruch 1,
**dadurch gekennzeichnet, daß**
das Anschlagteil (9) als einteiliges Bauteil ausgeführt ist.

3. Riegelelement nach Anspruch 1,
**dadurch gekennzeichnet, daß**
das Anschlagteil (9) zwei separate Rollelemente (12, 13; 15, 16) aufweist.

4. Riegelelement nach einem der Ansprüche 1 bis 3,
**dadurch gekennzeichnet, daß**
die Anschlagfläche (12A, 15A) eines Rollelementes (12, 15) leicht ballig geformt ist.

5. Riegelelement nach einem der Ansprüche 1 bis 4,
**dadurch gekennzeichnet, daß**
die Rollelemente (12, 13) zylinderförmig ausgebildet sind und auf dem Bolzen (10) eine T-förmige Anordnung bilden, wobei das über den Vorsprung (5) in die Ausparung (17) am Frachtgut (4) greifende Rollelement (12) im wesentlichen flach ausgebildet ist und die Stirnfläche dieses Rollelementes (12) die Anschlagfläche (12A) in vertikaler Richtung bildet und die Mantelfläche des zylinderförmigen Rollelementes (13) die Anschlagfläche (13A) in lateraler Richtung bildet.

6. Riegelelement nach einem der Ansprüche 1 bis 4,
**dadurch gekennzeichnet, daß**
die Rollelemente (15, 16) kegelstumpfförmig ausgebildet und deren Mantelflächen die Anschlagflächen (15A, 16A) für das Frachtgut (4) in vertikaler und lateraler Richtung bilden.

7. Riegelelement nach einem der Ansprüche 1 bis 6,
**dadurch gekennzeichnet, daß**
die Abmessungen des Rollelements (12, 15) der Aussparung (17) am Frachtgut (4) angepaßt sind.

## Claims

1. Locking element for arresting freight within a freight-loading system, particularly in an aircraft, wherein the locking element engages over corresponding projections of the freight, such as pallets or freight containers, on the said freight and fixes the latter in the vertical and lateral directions,
**characterised in that** the locking element (1) has a fastening part (6) and a stop part (9), which stop part (9) is rotatably disposed on a pin (10; 14) and is formed from at least two rolling elements (12, 13; 15, 16), the stop face (12A; 15A) of one rolling element (12; 15) fixing the freight (4) in the vertical direction and the stop face (13A; 16A) of the other rolling element (13; 16) fixing the said freight (4) in the lateral direction.

2. Locking element according to claim 1,
**characterised in that**
the stop part (9) is designed as a one-piece component.

3. Locking element according to claim 1,
**characterised in that**
the stop part (9) has two separate rolling elements (12, 13; 15, 16).

4. Locking element according to one of claims 1 to 3,
**characterised in that**
the stop face (12A, 15A) of a rolling element (12, 15) is slightly convex in shape.

5. Locking element according to one of claims 1 to 4,
**characterised in that**
the rolling elements (12, 13) are of cylindrical construction and form a T-shaped arrangement on the pin (10), the rolling element (12) which engages in the recess (17) on the freight (4) across the projection (5) being of substantially flat construction, the end face of the said rolling element (12) forming the stop face (12A) in the vertical direction, and the superficies of the cylindrical rolling element (13) forming the stop face (13A) in the lateral direction.

6. Locking element according to one of claims 1 to 4,
**characterised in that**
the rolling elements (15, 16) are of frustoconical construction and their superficies form the stop faces (15A, 16A) for the freight (4) in the vertical and lateral directions.

7. Locking element according to one of claims 1 to 6,
**characterised in that**
the dimensions of the rolling element (12, 15) are adapted to the recess (17) on the freight (4).

## Revendications

1. Elément de verrouillage destiné à bloquer des colis dans un système de fret, et plus particulièrement dans un avion, l'élément de verrouillage saisissant le colis par l'intermédiaire de saillies correspondantes du colis comme des palettes ou des conteneurs, et fixant ledit colis verticalement et latéralement,
**caractérisé en ce que** l'élément de verrouillage (1) présente une partie de fixation (6) et une partie de butée (9), la partie de butée (9) étant disposée sur un écrou (10 ; 14) de manière à pouvoir pivoter et étant composée d'au moins deux éléments de roulement (12, 13 ; 15, 16) et la surface de butée (12A ; 15A) d'un élément de roulement (12 ; 15) fixant le colis (4) verticalement tandis que la surface de butée (13A ; 16A) de l'autre élément de roulement (13 ; 16) fixe le colis (4) latéralement.

2. Elément de verrouillage selon la revendication 1, **caractérisé en ce que** la partie de butée (9) se présente sous la forme d'un élément structurel monobloc.

3. Elément de verrouillage selon la revendication 1, **caractérisé en ce que** la partie de butée (9) présente deux éléments de roulement 12,13 ; 15,16).

4. Elément de verrouillage selon une des revendications 1 à 3, **caractérisé en ce que** la surface de butée (12A, 15A) d'un élément de roulement (12, 15) est légèrement bombée.

5. Elément de verrouillage selon une des revendications 1 à 4, **caractérisé en ce que** les éléments de roulement (12, 13) sont de forme cylindrique et forment, sur l'écrou (10), un montage en forme de T, l'élément de roulement (12) pénétrant via la saillie dans l'évidement (17) situé contre le colis (4) étant essentiellement plat, la surface d'attaque de cet élément de roulement (12) formant verticalement la surface de butée (12A) et l'aire latérale de l'élément de roulement (13) cylindrique formant latéralement la surface de butée (13A).

6. Elément de verrouillage selon une des revendications 1 à 4, **caractérisé en ce que** les éléments de roulement (15, 16) sont en forme de cône tronqué et les aires latérales de ces éléments de roulement forment, verticalement et latéralement, les surfaces de butée (15A, 16A) pour le colis (4).

7. Elément de verrouillage selon une des revendications 1 à 6, **caractérisé en ce que** les dimensions de l'élément de roulement (12, 15) sont adaptées à l'évidement sur le colis (4).
